# EUROPÄISCHE PATENTANMELDUNG

(11) **EP 1 762 870 A1**
(43) Veröffentlichungstag der Anmeldung: **14.03.2007**
(21) Anmeldenummer: 05405534.8
(22) Anmeldetag: 12.09.2005
(51) Int. Cl.: G02B 6/38

(54) **Gesichertes Steckverbindungssystem**

(71) Anmelder: Reichle & De-Massari AG, 8622 Wetzikon (CH)
(72) Erfinder: Friedrich, Giorgio, 8442 Hettlingen (CH); Leutwyler, Werner, 8053 Zürich (CH); Fry, Carli, 8852 Altendorf (CH)
(74) Vertreter: Frei Patent Attorneys

(57) **Zusammenfassung**

Ein elektrisches oder optisches Steckverbindungssystem weist ein Steckerteil (2) und ein Buchsen- oder Kupplungsteil (1) auf, welche miteinander verrastet werden. Daneben ist auch ein separates, entfernbares Entriegelungselement (3) vorhanden. Das Entriegelungselement besitzt eine Ausformung (3.1), die bspw. mehr oder weniger passgenau in eine entsprechende Ausformung (22.1) (bspw. Öffnung) des Stecker- oder des Buchsen- oder Kupplungsteils einführbar ist. Die Rastmittel zum Verrasten von Stecker- und Buchsen- oder Kupplungsteil sind so ausgebildet und bspw. unzugänglich, dass ohne Entriegelungselement (3) Stecker- und Buchsen- oder Kupplungsteil nicht voneinander getrennt werden können. Im eingeführten Zustand wirkt aber das Entriegelungselement (3) so mit den Rastmitteln zusammen, dass die Rastverbindung trennbar ist.

## Beschreibung

Die Erfindung betrifft die Sicherung und mechanische Verriegelung von Steckverbindungssystemen.

Aus Sicherheits- und Haftungsgründen ist es oft wichtig, dass Steckverbindungen zwischen elektrischen oder optischen Leitern so abgesichert sind, dass ein unbeabsichtigtes oder eventuell unbefugtes Trennen der Verbindung verunmöglicht oder zumindest erschwert wird.

Besonders aktuell sind solche Anforderungen an Steckverbindungen im Bereich der optischen Datenübertragung mittels Lichtwellenleitern. Um eine bessere Ausnutzung der bestehenden Infrastruktur und eine Erhöhung der Kapazität zu erreichen, wird in diesen die optische Leistung der durch die Wellenleiter geleiteten Strahlung laufend erhöht. Dies kann über eine oder mehrere der folgenden Massnahmen geschehen:
- Erhöhung der Faserzahlen, verbunden mit einer physikalischen Kapazitätserhöhung der lichtführenden Pfade,
- Ausnutzung des Zeitmultiplexings, hohe Bitrate,
- Verwendung von mehreren optischen Trägern (gleichzeitige Datenübertragung über mehrere Wellenlängen; bis zu 50 Kanäle pro optisches Fenster).

Hinzu kommt die Bestrebung, hohe Distanzen unter Wegfall von OEO-Wandlern zu überwinden, was den Unterhalt der Netze vereinfacht und somit die Investitionen nachhaltig verringert.

All diese Anpassungen bzw. Möglichkeiten bedingen aber eine durchgehend hohe Zuverlässigkeit der verwendeten Komponenten. Hierzu gehört ganz besonders der optische Steckverbinder, da die genannten Massnahmen mit markant hohen optischen Leistungen verbunden sind. Die transmittierten Leistungen können bis zu einigen MW/cm² betragen.

Leistungen von dieser Grössenordnung bringen nebst dem Bedürfnis nach hoher Betriebssicherheit und Zuverlässigkeit auch die Notwendigkeit eines funktionierenden Personenschutzes mit sich. Damit verbunden ist auch das Bedürfnis der Hersteller, dass die Sicherung so ausgelegt ist, dass bei unberechtigter Öffnung einer Verbindung Grobfahrlässigkeit geltend gemacht werden kann. Dies kann bspw. bedingen, dass zur Öffnung einer Verbindung Gewalt angewendet werden muss oder gar die Zerstörung der Kupplung in Kauf genommen werden muss.

Die zum jetzigen Zeitpunkt am Markt erhältlichen optischen Steckverbindungen, aber auch einige elektrische Signal-Steckverbindungen sind Verbindungen zwischen Steckern ("male connectors") unter Zuhilfenahme einer Kupplung (Zwischenstück), in welche beidseitig je mindestens ein Stecker einführbar ist. Im Falle von optischen Steckverbindungen kann die Kupplung jeweils so ausgelegt sein, dass eine mechanische Verriegelung sicherstellt, dass die Ferrulen der vollständig eingeführten Stecker aufeinander gedrückt werden, um im Allgemeinen durch einen physischen Kontakt eine möglichst verlustarme Übertragung der Lichtwellen zu gewährleisten. (mit "Lichtwellen" wird in diesem Text durchgehend nicht nur auf sichtbares Licht, sondern generell auf elektromagnetische Wellen, insbesondere auch im Infrarotbereich verwiesen. Speziell bevorzugter Bereich: 0.1 µm bis 5 µm).

Es sind bereits viele Sicherungsvorrichtungen für Steckverbindungen bekannt. Zum bekannten Stand der Technik gehören verschraubte Verbindungen, Bajonett-Verbindungen, Push-Pull-Verbindungen, so genannte latched Push-Pull-Verbindungen sowie kombinierte Lösungen.

Eine beispielsweise von elektrischen Steckverbindungen des Typs RJ-45 oder aus den Schriften WO 03/104870 und US 6,821,024 bekannte Lösung beruht auf einem einrastbaren Rastmittel (Rastklinke) sowie auf einem Blockierelement, welches ein Betätigen des Rastmittels im eingerasteten Zustand verhindert, wenn dieses Blockierelement nicht durch eine gesonderte Bewegung, bspw. entgegen einer Federkraft verschoben oder entfernt wird. Eine andere aus dem Stand der Technik bekannte Lösung beinhaltet ein Rastmittel, welches so im Gehäuse angebracht ist, dass es für den Benutzer nicht zugänglich ist. Stattdessen ist ein am Stecker ausgebildeter Entriegelungshebel vorhanden, durch welchen das Rastmittel betätigbar ist. Eine solche Lösung ist bspw. aus der Schrift EP 0 616 236 bekannt.

Diese Lösungen bringen zwar eine etwas erhöhte Sicherheit, bieten aber nach wie vor keinen Schutz vor unbefugtem Trennen der Steckverbindung. Insbesondere für das Trennen der Steckverbindung gemäss EP 0 616 236 ist auch nur eine einzige Handbewegung nötig, so dass der Schutz gegen unerlaubtes Trennen nicht gewährleistet ist.

Es ist Aufgabe der Erfindung, eine Sicherungsvorrichtung für elektrische und optische Steckverbindungen zur Verfügung zu stellen, welche Nachteile des Standes der Technik überwindet und welche den vorstehend erwähnten erhöhten Sicherheitsbedürfnissen Rechnung trägt, insbesondere dass der Rechtsanspruch der Grobfahrlässigkeit geltend gemacht werden kann.

Diese Aufgabe wird erfindungsgemäss im Wesentlichen dadurch gelöst, dass die elektrische oder optische Steckverbindung, nebst einem Buchsen- oder Kupplungsteil, einem Steckerteil und einem Rastmittel zum gegenseitigen Verrasten von Stecker- und Buchsen- respektive Kupplungsteil ein separates, entfernbares Entriegelungselement aufweist. Das Entriegelungselement besitzt eine Ausformung, die bspw. mehr oder weniger passgenau in eine entsprechende Ausformung (bspw. Öffnung) des Stecker- oder Buchsen- respektive Kupplungsteils einführbar ist. Die Rastmittel sind so ausgebildet, dass ohne Entriegelungselement Stecker- und Buchsen- oder Kupplungsteil nicht voneinander getrennt werden können. Im eingeführten Zustand wirkt aber das Entriegelungselement so mit den Rastmitteln zusammen, dass die Rastverbindung trennbar wird.

Das Steckerteil weist mindestens einen Stecker (,male') auf. Das Buchsen- oder Kupplungsteil kann eine Buchse (,female') zum Zusammenwirken mit einem entsprechenden Stecker sein. Es kann aber auch ein Zwischenstück (ebenfalls 'female') sein, in welchen beidseitig je mindestens ein Stecker einführbar ist, so, dass die von beiden Seiten eingeführten Stecker miteinander in elektrischem Kontakt sind bzw. dass Licht vom einen Stecker in den anderen Stecker einkoppelbar ist. Das Steckerteil ist bspw. ein Stecker oder Mehrfachstecker.

Am Stecker- und/oder am Buchsen- respektive Kupplungsteil kann ein Betätigungselement - bspw. fest aber schwenkbar - angebracht sein, durch welches die Rastverbindung bei eingeführtem Entriegelungselement getrennt wird. Alternativ dazu kann die Rastverbindung auch durch das Entriegelungselement selbst getrennt werden.

Die Rastmittel können in an sich bekannter Art ein federndes Element (Rastklinke) aufweisen, welches im eingerasteten Zustand hinter einem Sperrelement eingerastet ist. Zum Trennen der Rastverbindung muss das federnde Element entgegen der Federkraft über die Rastklinke angehoben werden. Durch das erfindungsgemässe Vorgehen ist das nur bei eingeführtem Entriegelungselement möglich. Das Anheben kann durch das eventuell vorhandene separate Betätigungselement oder durch das Entriegelungselement selbst geschehen.

Der Begriff "Rastklinke" bedeutet nicht, dass dieses Element notwendigerweise so ausgebildet ist wie von Rastklinken gemäss dem Stand der Technik bekannt. Vielmehr ist damit jedes Element gemeint, welches beim Einschieben aufgrund einer Federwirkung hinter einem entsprechend ausgeformten Sperrelement einrastet und dadurch verhindert, dass die Steckverbindung ohne weiteres wieder getrennt werden kann.

Gemäss einer speziellen Ausführungsform bilden das Betätigungselement und das eingeführte Entriegelungselement zusammen eine Art Kipphebel zum Anheben der Rastklinke. In dieser Ausführungsform ist die genannte Ausformung, welche an Steckerteil oder Buchsen- respektive Kupplungsteil vorhanden ist, an diesem Betätigungselement ausgebildet. Das Bestätigungselement befindet sich bspw. im Wesentlichen innerhalb des Buchsenteils bzw. des Kupplungsteils und erstreckt sich nur so weit aus dem entsprechenden Gehäuse, dass die Ausformung ein Einführen der entsprechenden Ausformung des Entriegelungselements erlaubt, dass es ein Benutzer aber nicht ohne Werkzeug betätigen kann. Das Entriegelungselement wirkt als eine Art Hebel zum Betätigen der Rastklinke. Die Ausformungen am Betätigungselement und Entriegelungselement sind so ausgebildet, dass sie durch einen Formschluss eine mechanisch feste Kopplung zwischen Betätigungselement und Entriegelungselement bewirken, sie können bspw. als im Querschnitt schwalbenschwanzförmige Feder mit entsprechender Nut ausgebildet sein.

In einer anderen Ausführungsform besitzt das Betätigungselement ein relativ zur Rastklinke verschiebbares Übertragungselement. Das Betätigungselement weist weiter bspw. einen Kipphebel auf, durch welchen die Rastverbindung getrennt wird. Bei Betätigung des Betätigungselements ist es das Übertragungselement, welches das vom Benutzer angelegte Moment vom Kipphebel auf die Rastklinke überträgt und diese anhebt. Das Übertragungselement ist aber so ausgebildet, dass es bei Betätigung des Kipphebels ausweicht und die Rastklinke deshalb nicht anheben kann, ausser es wird durch das eingeführte Entriegelungselement relativ zu der Rastklinke blockiert.

Auch in denjenigen Ausführungsformen, in welchen das Entriegelungselement selbst die Rastverbindung trennt, indem es ggf. die Rastklinke anhebt, gibt es verschiedene Varianten für die Art der Betätigung. Gemäss einer ersten Variante weist die Klinke eine rampenartige Fläche auf. Bei Einschieben der bspw. dornartigen Ausformung des Entriegelungselementes gleitet diese der rampenartigen Fläche entlang und hebt dadurch die Rastklinke über das Sperrelement an. Gemäss einer zweiten Variante wird die Rastklinke durch eine Drehbewegung des Entriegelungselementes - in der Art eines Schlüssels, welcher in ein Schloss eingeführt ist - angehoben. Weitere Varianten sind denkbar, bspw. mit einer rampenartigen Fläche am Entriegelungeselement.

Besonders bevorzugt ist die Ausformung an einem vorzugsweise am Steckerteil befestigten, mit dem Rest des Steckerteils aber nicht einstückigen Aufnahmelement vorhanden. Diese Lösung ist insbesondere in denjenigen Ausführungsformen sinnvoll, in welchen das Entriegelungselement selbst (direkt) die Rastverbindung trennt. Während das Entriegelungselement als eine Art "Schlüssel" zum Trennen der Verbindung fungiert, ist das Aufnahmeelement so etwas wie ein "Schloss", zu welchem der Schlüssel passen muss.

In allen Ausführungsformen kann das Entriegelungselement (optional) eine Einrastnase aufweisen, welche im eingeführten Zustand in eine Einrastnut des Steckerteils oder Buchseinteils einrastet und das Entriegelungselement lösbar an der Steckverbindung (bzw. dem Steckerteil oder dem Buchsen- oder Kupplungsteil) hält. Selbstverständlich ist auch das Umgekehrte denkbar, also eine Einrastnut am Entriegelungselement und eine Einrastnase am Stecker- oder am Buchsen- oder Kupplungsteil. Die Einrastnase kann durch Betätigen eines Entrasthebels am Entriegelungselement aus der Einrastnut angehoben werden, worauf das Entriegelungselement entfernt werden kann.

Die Elemente der erfindungsgemässen Steckverbindung (Steckerteil/Buchsen- oder Kupplungsteil) können vorzugsweise durch einen Benutzer ohne separate Hilfsmittel und ohne spezielle Massnahmen miteinander verrastet werden, wie das auch aus dem Stand der Technik bekannt ist. Hingegen bewirkt das erfindungsgemässe Vorgehen eine im Vergleich zum Stand der Technik erhöhte Sicherheit bezüglich Trennen der Verbindung. Es bewirkt sowohl einen Vorteil bezüglich der Personensicherheit als auch bezüglich Produktehaftungsaspekten als auch bezüglich der Betriebssicherheit. Eine erhöhte Personensicherheit und Betriebssicherheit ist dadurch gewährleistet, dass ein unbeabsichtigtes Trennen der Steckverbindung durch eine bspw. unglückliche Kombination zweier Bewegungen nicht möglich ist. Die Steckverbindung ist nur trennbar, indem ein sich im Betriebszustand nicht bei der Steckverbindung befindliches Entriegelungselement zur Steckverbindung gebracht und dort gezielt eingeführt wird. Dies ist auch unter Produktehaftungs-Aspekten vorteilhaft, denn jedes zerstörungsfreie Trennen der Verbindung ist nachweislich unter Zuhilfenahme des Entriegelungselementes zustande gekommen. Es war demgemäss beabsichtigt und wurde durch Personen vorgenommen, denen ein Entriegelungselement zur Verfügung stand, und an die spezielle Anforderungen (Berechtigung etc.) gestellt werden konnten. Der Hersteller hat demzufolge seine Sorgfaltspflicht erfüllt. Ein eventuelles unangebrachtes Trennen der Steckverbindung ist auf Nachlässigkeit bzw. Grobfahlässigkeit des Benutzers zurückzuführen.

Noch weitere Sicherheitselemente ergeben sich durch die Codierungsmöglichkeiten. Eine erste - mechanische - Codierungsmöglichkeit bietet das erfindungsgemässe Vorgehen dadurch, dass die Ausformungen des Entriegelungselemntes und des Buchsen- oder Kupplungsteils/Steckerteils aufeinander abgestimmt werden können. So können bspw. für verschiedene Systeme/Anwendungen/Benutzer verschiedene Ausformungs-Querschnittsformen gewählt werden, bspw. verschiedene Vieleck-Formen, T-Formen, Winkel etc. Es gibt eine zweite mechanische Codierungsmöglichkeit, die ein vollständiges Einführen des Entriegelungselementes bei fehlender Übereinstimmung verhindert. Diese besteht, indem das Entriegelungselement zum Steckerteil (oder. Buchsen- respektive Kupplungsteil) hin separate Codierungen - bspw. Codierungs-Vorsprünge und -Aussparungen - aufweist, welche mit entsprechenden Codierungen des Stecker- bzw. Buchsenrespektive Kupplungsteils zusammenwirken und welche bei fehlender Übereinstimmung bewirken, dass das Entriegelungselement - bzw. die Ausformung - nicht vollständig und wirksam eingeführt werden kann. Herstellungstechnisch besonders günstig sind diese beiden Arten der Codierung im Zusammenhang mit dem bereits erwähnten Aufnahmeelement: Für Steckverbindungen unterschiedlicher Codierungen muss das Stecker- bzw. Buchsen- oder Kupplungsteil in nur einer Ausführung hergestellt werden; lediglich das Aufnahmeelement muss in verschiedenen Formen angeboten werden. Gleichzeitig zur mechanischen Codierung kann auch eine Farbcodierung vorhanden sein. Eine dritte Möglichkeit der Codierung ergibt sich - in an sich bekannter Art - zwischen Steckerteil und Buchsen- oder Kupplungsteil. In der Ausführungsform mit am Steckerteil vorhandenem Aufnahmeelement ergeben sich aber in Kombination mit dem erfindungsgemässen Vorgehen auch hier herstellungstechnische Vorteile, müssen doch auch für diese Codierung nicht verschiedene Ausführungen des Steckers bzw. Buchsen- oder Kupplungsteils hergestellt werden. Die zweite und dritte Art der Codierung kann bspw. an einer Vorder- und Hinterseite des Aufnahmeelements vorgesehen sein. Die entsprechende Codierung des Buchsen- oder Kupplungsteils kann an der Buchse selbst oder an einem an dieser befestigbaren Codierungselement (bspw. in der Art eines umlaufenden Rahmens) ausgeführt sein.

Gegenstand der Erfindung sind auch die Bestandteile der Steckverbindung, also ein Stecker, ein Buchsen- oder Kupplungsteil ein Aufnahmeelement, ein Betätigungselement sowie ein Entriegelungselement.

Ein erfindungsgemässer Stecker weist in einer besonderen, bereits kurz erläuterten Ausführungsform das Sperrelement, hinter welches die Rastklinke einer Buchse einrastbar ist, sowie zusätzlich ein Aufnahmeelement auf. Im Aufnahmeelement ist die Ausformung ausgebildet, in welche eine entsprechende Ausformung eines Entriegelungselements einführbar ist.

Im Folgenden werden Ausführungsbeispiele der Erfindung anhand von Zeichnungen im Detail beschrieben. In den Zeichnungen zeigen:
- Fig. 1 eine Schnittdarstellung eines Ausschnitts aus einem erfindungsgemässen Steckverbinders, wobei die elektrischen Kontakte bzw. die Ferrulen der Lichtwellenleiter nicht gezeichnet sind,
- Fig. 2, 3 und 4 je eine Darstellung eines Entriegelungselementes, eines Aufnahmeelementes und des ins Aufnahmeelement eingeführten Entriegelungselementes des Ausführungsbeispiels gemäss Fig. 1, in unterschiedlicher Vergrösserung dargestellt,
- Fig. 5 Ansichten eines Steckerteils und eines aus Draht geformten Entriegelungselementes (separat und ins Steckerteil eingeführt) eines alternativen Ausführungsbeispiels der Erfindung,
- Fig. 6 eine Ansicht eines Aufnahmeelementes und eines Entriegelungselementes eines weiteren Ausführungsbeispiels,
- Fig. 7 eine Schnittdarstellung eines Ausführungsbeispiels der Erfindung, bei welchem das Steckerteil ein Betätigungselement aufweist,
- Fig. 8 eine Darstellung eines Betätigungselementes und eines Entriegelungselementes eines weiteren,
- Fig. 9 eine Duplex-Version des Ausführungsbeispiels aus Figur 5 in verschiedenen Ansichten.

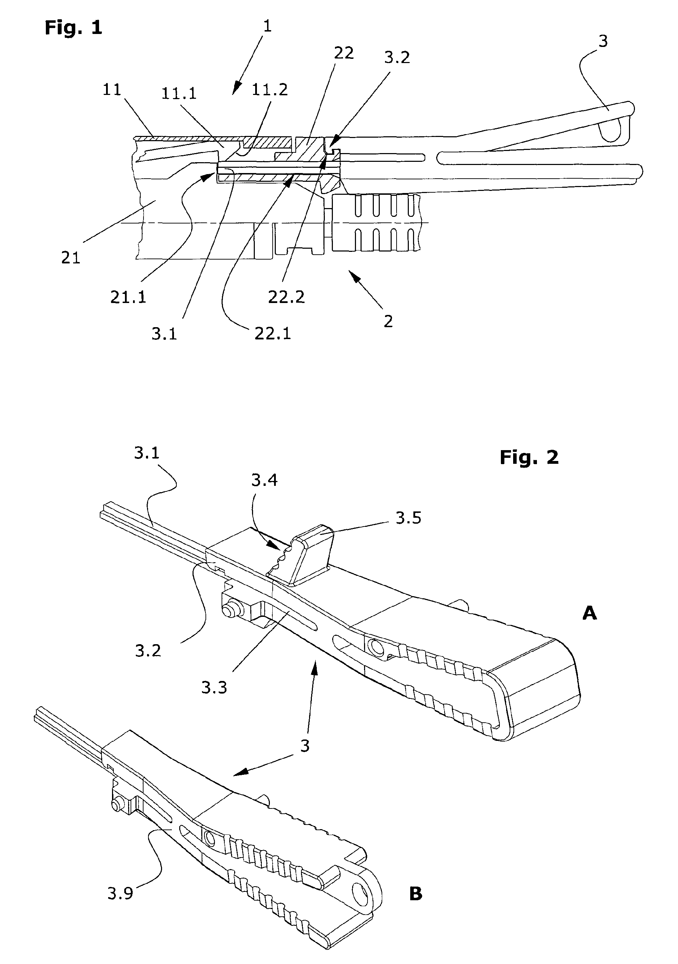

Die in **Figur 1** ausschnittweise gezeigte Steckverbindung umfasst ein Buchsenrespektive Kupplungsteil 1, ein Steckerteil 2 mit Aufnahmeelement 22 und ein Entriegelungselement 3. Innerhalb des Buchsen- respektive Kupplungsteils 11 und für einen Benutzer nicht zugänglich weist das Buchsen- respektive Kupplungsteil eine Rastklinke 11.1 auf, welche im eingesteckten Zustand des Steckers 2 hinter einem Sperrelement 21.1 desselben einrastet. Im gezeichneten Ausführungsbeispiel ist das Sperrelement 21.1 am Steckergehäuse 21 ausgeformt. Der Stecker 2 weist weiter das mit dem Steckergehäuse 21 nicht einstückige, aber fest und nicht lösbar an diesem befestigte Aufnahmelement 22 auf.

Im gezeichneten Zustand wäre es ohne Entriegelungselement nicht möglich, den Stecker zu ziehen ohne Bauteile der Steckverbindung zu zerstören oder zumindest zu beschädigen.

Das Entriegelungselement 3 weist eine Ausformung 3.1 auf, welche in eine entsprechende Ausformung 22.1 - ein Loch - des Aufnahmeelementes 22 einführbar ist. Wenn die Ausformung 3.1 des Entriegelungselementes vollständig eingeführt ist, wird aufgrund der rampenartigen Fläche 11.2 der Rastklinke 11.1 diese angehoben und das Sperrelement 21.1 freigegeben: der Stecker kann gezogen werden.

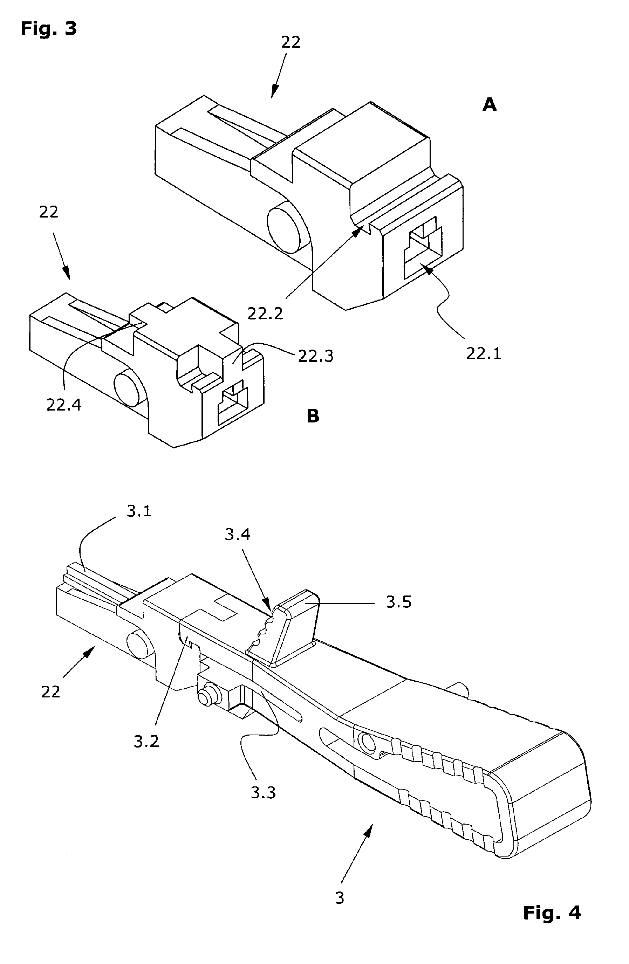

In den **Figuren 2 bis 4** sieht man, dass die Ausformungen 3.1, 22.1 des Entriegelungselementes 3 und des Aufnahmeelementes 22 eine spezielle - hier T-förmige - Querschnittsfläche haben und im Wesentlichen passgenau ineinander greifen. Zwischen dem Aufnahmelement und dem Entriegelungselement existiert also eine Art Schloss/Schlüssel-Beziehung. Wie man am besten in Figur 4 sieht, ist im Ausführungsbeispiel der Figuren 1 bis 4 die Ausformung 3.1 des Entriegelungselementes 3 notwendigerweise länger als die Tiefe des Lochs, das durch die Ausformung 22.1 des Aufnahmeelementes gebildet wird. Dies ist Voraussetzung dafür, dass die Rastklinke 11.1 durch Einführen der Ausformung 3.1 angehoben werden kann.

Im gezeichneten Beispiel besitzt die Paarung Aufnahmeelement/Entriegelungselement 22, 3 zusätzlich eine Einrastvorrichtung, welche das lösbare Verrasten ermöglicht. Die Einrastvorrichtung besteht hier aus einer Rastnase 3.2 des Entriegelungselementes 3, welches mit einer Rastnut 22.2 des Aufnahmeelementes zusammenwirkt. Die Einrastvorrichtung ermöglicht es, dass bei vollständig eingeführtem Entriegelungselement die Steckverbindung durch ein Ziehen am Entriegelungselement in Richtung der Steckerachse getrennt werden kann, was aufgrund der oft gewählten Dimensionierungen von Buchsen- oder Kupplungsteil und Steckerteil sowie der engen Platzverhältnisse auf Steckfeldern mit einer Mehrzahl von gesteckten Steckern komfortabel sein kann. Zum Lösen der Einrastvorrichtung weist das Entriegelungselement 3 bspw. einen Einschnitt 3.3 auf und ist dadurch leicht elastisch verformbar. Es besteht bspw. aus einem harten, aber doch elastisch verformbaren Kunststoff. Durch Druck auf eine Betätigungsfläche 3.4 eines beispielsweise vorhanden Entrasthebels 3.5 (Figur 2, Zeichnung A) kann der Benutzer die Rastnase 3.2 leicht anheben und anschliessend das Entriegelungselement entfernen.

Als Alternative zur vorgenannten Ausführung mit Entrasthebel kann das Entriegelungselement 3 auch bspw. gemäss Figur 2, Zeichnung B ausgeführt sein. In dieser Variante ist ein Gelenk 3.9 vorhanden, aufgrund dessen sich die Rastnase durch Zusammendrückens des Entriegelungselementes in einer hinteren Partie anheben lässt - ähnlich des Funktionsprinzips einer Wäscheklammer.

In Figur 3 zeigt Zeichnung A das Aufnahmeelement 22 ohne Codierung, Zeichnung B mit zwei Codierungen entsprechen der vorstehend erwähnten zweiten und dritten Codierungsmöglichkeiten. Ein (in Bezug auf die Steckverbindung) äusserer Codierungsvorsprung 22.3 wirkt zwischen dem Aufnahmeelement (oder in anderen Ausführungsformen dem Steckergehäuse) und dem Entriegelungselement 3, was auch in Figur 4 dargestellt ist. Ein solcher äusserer Codierungsvorsprung kann bspw. bei Steckverbindungen vorgesehen sein, bei welchen ein besonders hoher Sicherheitsstandard gewährleistet sein muss. Die Entriegelungselemente 3 mit entsprechender Codierungsaussparung (Fig. 4) sind bspw. nur bei ausgewiesenen Spezialisten oder nur beim Hersteller oder dessen Vertragspartner vorhanden.

Ein innerer Codierungsvorsprung 22.4 dient der mechanischen Codierung zusammen mit dem Buchsen- oder Kupplungsteil bzw. einem daran vorgesehenen Codierrahmen. Diese - an sich bekannte - Art der Codierung verhindert, dass nicht passende Stecker in das entsprechende Buchsen- respektive Kupplungsteil eingeschoben werden können.

Zwischen dem Entriegelungselement und dem Aufnahmeelement kann eine weitere mechanische Codierung (nicht gezeichnet) ausgebildet sein. Zu diesem Zweck sind dann am Entriegelungselement charakteristische geometrische Merkmale vorhanden, welche entsprechenden Merkmalen des Aufnahmelementes entsprechen und sich bspw. dort befinden, wo beim gezeichneten Beispiel die Rastnase 3.2 angeformt ist, oder auf der gegenüberliegenden (in der Darstellung unteren) Seite.

Das Ausführungsbeispiel der Figuren 1 bis 4 sieht ein vom Steckergehäuse separates Aufnahmeelement vor; dies ist aber für den erfinderischen Gedanken keine Voraussetzung. Die vorstehend beschriebenen Merkmale können auch in einem Ausführungsbeispiel realisiert sein, bei welchem die Ausformung und die weiteren Merkmale des hier beschriebenen Aufnahmeelementes direkt am Steckergehäuse ausgebildet sind.

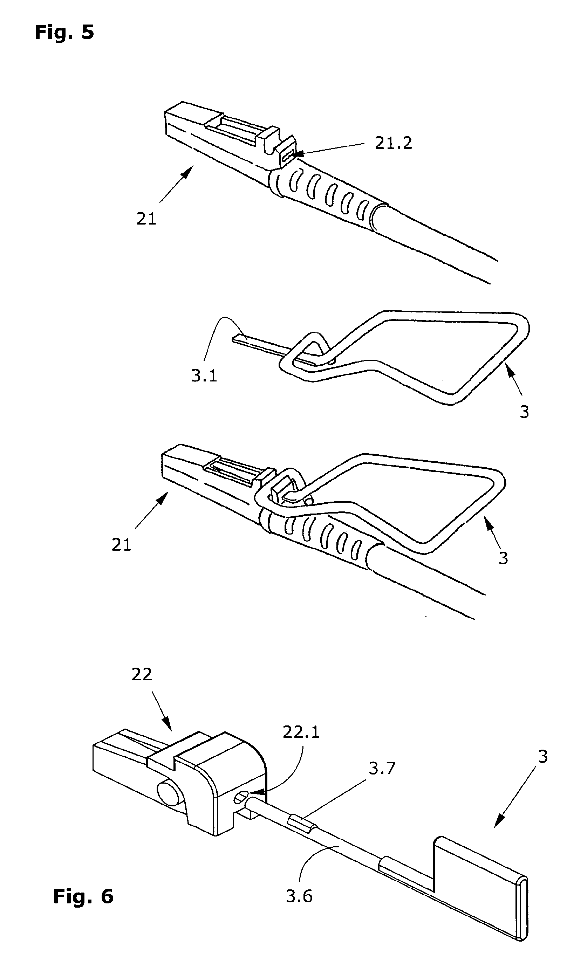

Eine weitere Variante des vorstehend beschriebenen Ausführungsbeispiels, bei welcher eine Ausformung 21.2 zum Einführen der entsprechenden Ausformung 3.1 des Entriegelungselementes 3 unmittelbar am Stecker 21 vorhanden ist, ist in Figur 5 gezeichnet. Diese Variante ist von der Funktionsweise dem vorstehend beschriebenen Beispiel ähnlich. Ein weiterer Unterschied zu diesem ist, dass das Entriegelungselement 3 nicht körperhaft und aus Kunststoff ausgebildet ist. Vielmehr ist es als gebogener und zum Teil bspw.geprägter Draht ausgeführt. Die Prägung des Drahtes findet sich in derjenigen Partie, welche die Ausformung 3.1 bildet. Sie hat ähnlich der T-Form (als Beispiel) des Ausführungsbeispiels der Figuren 1 bis 4 die Funktion einer Codierung. Auch diese T-förmige Ausprägung der Ausformung 3.1 hat die Funktion einer Codierung. Durch die entsprechende, nicht runde Ausgestaltung der Ausformungen 3.1, 21.1 ist weiter sichergestellt, dass die Verbindung nicht durch Einführen eines gewöhnlichen steifen Drahtes trennbar ist.

Noch eine Variante der vorstehend beschriebenen Ausführungsbeispiele ist in Figur 6 skizziert. Auch bei dieser Variante wird die Rastklinke des Buchsen- respektive Kupplungsteils direkt durch das Entriegelungselement 3 angehoben. Im Unterschied zu jener Ausführungsform geschieht dies aber nicht durch eine translatorische Bewegung - das Einschieben des Entriegelungselements - sondern durch eine rotatorische Bewegung, nämlich das Drehen des eingeschobenenen Entriegelungselements. Ähnlich der Ausführungsform der Figuren 1 bis 4 weist die Steckverbindung ein vorzugsweise mit dem Gehäuse des Steckerteils (nicht gezeichnet), oder aber mit dem Buchsen- respektive Kupplungsteil verbundenes Aufnahmeelement 22 auf. Die Ausformung 3.1 am Entriegelungselement 3 besitzt einen zylindrischen Abschnitt 3.6 und einen Entriegelungsvorsprung 3.7. Dieser besitzt hier im Querschnitt eine Form, welche der Form der Ausformung 22.1 am Aufnahmelement 22 entspricht. Dadurch dient der Entriegelungsvorsprung 3.7 auch gleich der mechanischen Codierung. Die Funktion des Entriegelungsvorsprungs 3.7 ist ähnlich derjenigen eines Schlüsselbarts. Durch Drehen des Entriegelungselementes um eine Achse - entsprechend der Achse des zylindrischen Abschnitts 3.6 - wirkt der Entriegelungsvorsprung 3.7 als eine Art Mitnehmer und bewirkt dadurch die Entriegelung. Im beschriebenen Beispiel geschieht das, indem er die Rastklinke über das Sperrelement anhebt. Unter Umständen (je nach Dimensionierung des Buchsen- oder Kupplungsteils) ist es angebracht, den Entriegelungsvorsprung 3.7 abweichend von der Darstellung von Figur 6 zuvorderst an der Ausformung anzubringen oder bis zuvorderst an die Ausformung zu ziehen. Das Aufnahmeelement kann einen Anschlag für den Entriegelungsvorsprung 3.7 besitzen, wodurch dessen für das Entriegeln benötigte Orientierung für den Benutzer erkennbar bestimmt wird.

Ein Vorsprung von der Art des Entriegelungsvorsprunges 3.7 kann ergänzend oder alternativ zur beschriebenen Funktion eine weitere Funktion haben: Er kann durch Drehen des Entriegelungselementes - bspw. um 90° - hinter einen Blockiervorsprung des Steckergehäuses oder Aufnahmeelementes geschoben werden und damit das Entriegelungselement gegen ein Herausziehen aus dem Steckerteil blockieren. Dann ersetzt der genannte Vorsprung die Einrastnase: man kann das Steckerteil durch einen Zug am Entriegelungselement vom Buchsen- oder Kupplungsteil trennen. Die Entriegelung kann dabei wie vorstehend beschrieben oder wie im Ausführungsbeispiel gemäss den Figuren 1 bis 4 erfolgen.

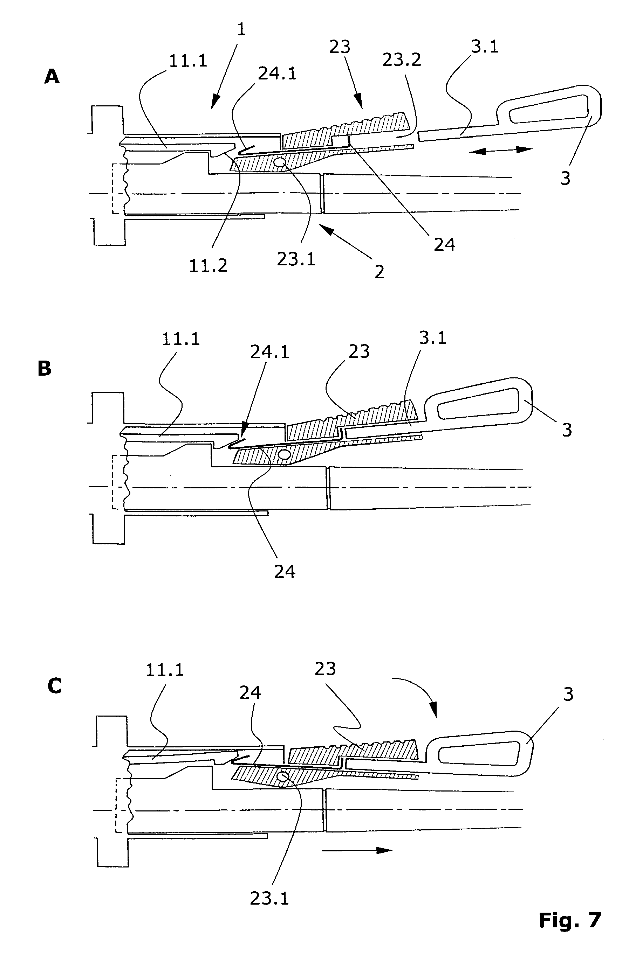

Die Ausführungsform gemäss Figur 7 weist ein vorzugsweise am Stecker befestigtes Betätigungselement 23 auf. Dieses ist bspw. als eine Art Kipphebel (mit Kippachse 23.1) ausgebildet. Durch Betätigen des Betätigungselements 23 (Kipphebel) wird die Rastklinke angehoben. Das Betätigungselement ist aber so ausgebildet, dass eine Betätigung wirkungslos ist, wenn das Entriegelungselement 3 nicht eingeführt ist. In der gezeichneten Ausführungsform wird das dadurch bewirkt, dass innerhalb des Betätigungselements ein Übertragungselement 24 vorhanden ist, welches die Kippbewegung an die Rastklinke überträgt. Das Übertragungselement 24 ist als innerhalb des Betätigungselements verschiebbares "Plättchen" (Feder) ausgebildet. Es besitzt bspw. eine mit der rampenartigen Fläche 11.2 der Rastklinke zusammenwirkende Rampe 24.1 auf. Aufgrund dieser Formgebung weicht das Übertragungselement wie in Zeichnung A der Figur 7 gezeichnet gegen aussen aus, wenn das Betätigungselement betätigt wird. Bei eingeführtem Entriegelungselement 3 wird ein Ausweichen des Übertragungselements 24 verhindert (Zeichnung B), wodurch die Rastklinke 11.1 durch Kippen des Betätigungselements angehoben wird (Zeichnung C).

Im hier gezeichneten Beispiel wird bei nicht eingeführtem Entriegelungselement das Übertragungselement 24 bei einer Betätigung des Betätigungselementes 23 aufgrund der Wirkung der Rampe zurückgeschoben. Es sind ergänzend oder alternativ auch andere Arten des Zurückstellens denkbar, bspw. aufgrund einer Federwirkung des Übertragungselementes oder eines separaten Federelementes (bspw. Zylinderfeder oder Druckfeder).

Wie in den vorstehenden Ausführungsbeispielen ist die Ausformung 3.1 vorzugsweise passgenau auf die Ausformung 23.2 des Steckerteils (hier am Betätigungselement 23) abgestimmt, so dass die Querschnittsform gleichzeitig als Codierung wirken kann und dass die Verbindung nicht mit einem gewöhnlichen Hilfsmittel wie bspw. einem Draht trennbar ist.

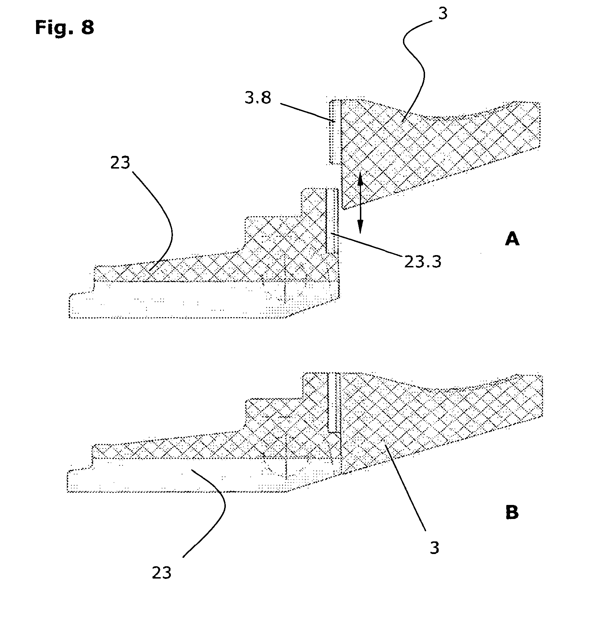

In Figur 8 ist eine Ausführungsform gezeichnet, in welcher das Entriegelungselement als Griff eines Kipphebels wirkt. In dieser Ausführungsform ist das Betätigungselement 23 so durch das Kupplungs- oder Buchsenteil abgedeckt wird, dass es bei nicht eingeführtem Entriegelungselement nicht betätigbar ist. Das Entriegelungselement 3 ist durch einen Formschluss mechanisch ans Betätigungselement 23 koppelbar und wirkt ans Betätigungselement 23 gekoppelt als Hebel bei der Betätigung desselben mit einer Kippbewegung. In der gezeichneten Ausführungsform erfolgt das Ankoppeln des Entriegelungselements 3 ans Betätigungselement 23 durch eine schwalbenschwanzförmige Ausformung 3.8, welche mit einer entsprechenden Ausnehmung 23.3 einen Formschluss bewirkt. Das Befestigen des Entriegelungselements 3 erfolgt durch Einschieben, wie in Zeichnung A der Figur 8 gezeichnet. In Zeichnung B ist das Entriegelungselement 3 ans Betätigungselement 23 gekoppelt gezeichnet.

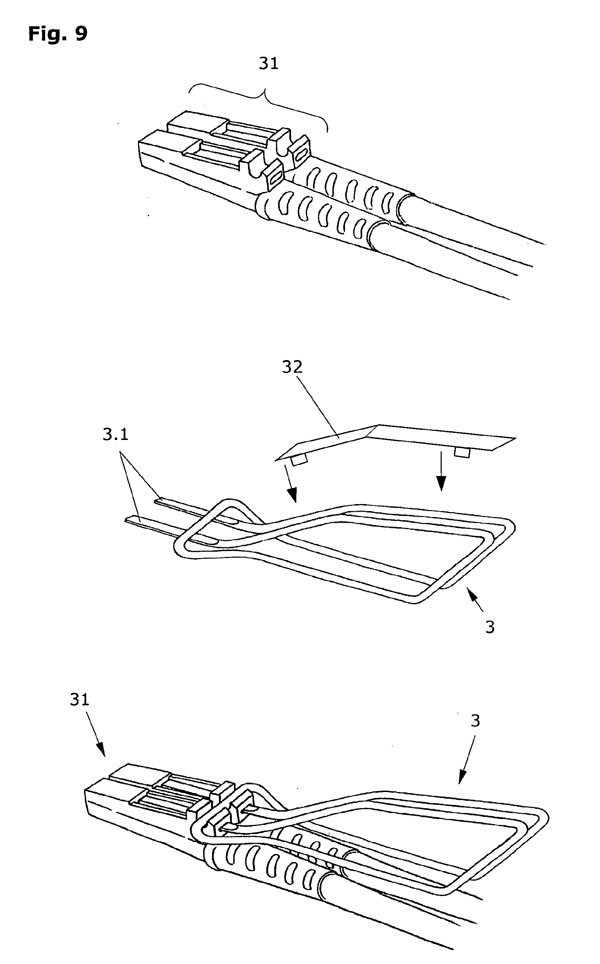

Die vorstehend beschriebenen Ausführungsformen zeigen jeweils die Verbindung eines einzelnen Steckers mit einer Buchse. Selbstverständlich eignet sich die Erfindung auch für Mehrfachsteck-Varianten. Als Beispiel ist in Figur 9 eine Verbindung mit Duplex-Stecker 31 gezeichnet. Das Entriegelungslement 3 besitzt entsprechend zwei Ausformungen 3.1. Ansonsten entspricht die Ausführungsform gemäss Figur 9 in ihrer Funktion den vorstehend beschriebenen Ausführungsformen, insbesondere derjenigen gemäss Figur 5, weshalb sie hier nicht weiter beschrieben wird. Eine Abdeckplatte 32 (Griffeinsatz) des Entriegelungselements 3 dient dazu, die Drähte zu stabilisieren und kann ferner dazu dienen, wie vorstehend beschrieben eine farbliche Codierung zu implementieren und/oder eine Beschriftung anzubringen.

Weitere Ausführungsformen sind denkbar. Zum Beispiel kann wie bei beschriebenen Ausführungsbeispielen ein Betätigungshebel an Stecker oder Buchse vorhanden sein. Der Betätigungshebel ist bspw. für den Benutzer zugänglich. Die Betätigung wird aber bei nicht eingeführtem Entriegelungselement durch ein Blockierelement verhindert. Dies kann bewirkt werden, indem das Blockierelement eine Auslenkung des Betätigungshebels verhindert, oder indem es direkt die Rastklinke blockiert. Das Blockierelement kann - bspw. entgegen der Wirkung einer Feder - durch das Entriegelungselement so verschoben werden, dass die Betätigung des Betätigungshebels freigegeben wird.

## Patentansprüche

1. Elektrisches oder optisches Steckverbindungssystem, aufweisend ein Buchsen- oder Kupplungsteil (1), ein Steckerteil (2), ein Rastmittel (11.1) durch welches eine zugfeste Rastverbindung zwischen dem Steckerteil und dem Buchsen- oder Kupplungsteil herstellbar ist, sowie ein Entriegelungsmittel zum Trennen der Rastverbindung, **dadurch gekennzeichnet, dass** das Entriegelungsmittel ein vom Buchsen- respektive Kupplungsteil und vom Steckerteil separates, von diesen entfernbares Entriegelungselement (3) aufweist, welches eine Ausformung (3.1, 3.8) aufweist, die in eine entsprechende Ausformung (22.1, 23.2, 23.3) des Steckerteils oder des Buchsen- respektive Kupplungsteils einführbar ist, und dass das eingeführte Entriegelungselement so mit den Rastmitteln zusammenwirkt, dass das Lösen der Rastverbindung das Einführen des Entriegelungselements voraussetzt.

2. Steckverbindungssystemnach Anspruch 1, **dadurch gekennzeichnet, dass** die Rastmittel eine federnde Rastklinke (11.1) aufweisen, welches im eingerasteten Zustand hinter einem Sperrelement (21.1) eingerastet ist, und dass zum Trennen der Rastverbindung die Rastklinke bei eingeführtem Entriegelungselement (3) über das Sperrelement anhebbar ist.

3. Steckverbindungssystem nach Anspruch 1 oder 2, **gekennzeichnet durch** ein am Buchsen- respektive Kupplungsteil (1) oder am Steckerteil (2) angebrachtes Betätigungselement (23), **durch** welches die Rastverbindung nur bei eingeführtem Entriegelungselement (3) trennbar ist.

4. Steckverbindungssystem nach Anspruch 3 **dadurch gekennzeichnet, dass** das Betätigungselement (23) so im Buchsen- respektive Kupplungsteil (1) abgedeckt ist, dass es bei nicht eingeführtem Entriegelungselement (3) nicht werkzeugfrei von Hand betätigbar ist, und dass das Entriegelungselement durch einen Formschluss mechanisch ans Betätigungselement koppelbar ist und **dadurch** ans Betätigungselement gekoppelt als Hebel bei der Betätigung desselben wirkt.

5. Steckverbindungssystem nach Anspruch 3 bezogen auf Anspruch 2, **dadurch gekennzeichnet, dass** das Betätigungselement (23) ein relativ zu der Rastklinke (11.1) verschiebbares Übertragungselement (24) aufweist, das durch das Entriegelungselement (3) so relativ zu der Rastklinke blockierbar ist, dass eine Betätigung des Betätigungselementes bei blockiertem Übertragungselement ein Anheben der Rastklinke über das Sperrelement (21.1) bewirkt.

6. Steckverbindungssystem nach Anspruch 2, **dadurch gekennzeichnet, dass** die Rastklinke (11.1) durch das eingeführte Entriegelungselement (3) über das Sperrelement (21.1) anhebbar ist.

7. Steckverbindungssystem nach Anspruch 6, **dadurch gekennzeichnet, dass** das Entriegelungselement (3) durch eine translatorische Bewegung in das Buchsenrespektive Kupplungsteil (1) teilweise einführbar ist, dass die Rastklinke (11.1) eine rampenartige Fläche (11.2) aufweist und dass bei Einführen des Entriegelungselementes dieses an der rampenartigen Fläche entlang gleitet und **dadurch** die Rastklinke über das Sperrelement (21.1) anhebt.

8. Steckverbindungssystem nach Anspruch 6, **dadurch gekennzeichnet, dass** das Entriegelungselement (3) eine Drehachse und einen einseitig von der Drehachse vorstehenden Entriegelungsvorsprung (3.7) hat und dass die Rastklinke durch Drehen des eingeführten Entriegelungselementes über das Sperrelement (21.1) anhebbar ist.

9. Steckverbindungssystem nach einem der vorangehenden Ansprüche, **gekennzeichnet durch** eine zusätzliche mechanische Codierung (22.3), **durch** welche bei fehlender Übereinstimmung verhindert wird, dass die Ausformung (3.1) des Entriegelungselementes (3) vollständig in die entsprechende Ausformung (22.1) des Steckerteils oder des Buchsen- respektive Kupplungsteils einführbar ist.

10. Steckverbindungssystem nach einem der vorangehenden Ansprüche, **dadurch gekennzeichnet, dass** die Ausformung (22.1) an einem am Steckerteil befestigten Aufnahmeleement (22) vorhanden ist.

11. Steckverbindungssystem nach Anspruch 10 bezogen auf Anspruch 9, **dadurch gekennzeichnet, dass** die zusätzliche mechanische Codierung am Aufnahmeelement (22) vorhanden ist.

12. Steckverbindungssystem nach einem der vorangehenden Ansprüche, **dadurch gekennzeichnet, dass** das Entriegelungselement (3) eine Einrastnase (3.1) aufweist, welche im eingeführten Zustand des Entriegelungselementes in eine Einrastnut (22.2) des Steckerteils (2) bzw. Buchsen- respektive Kupplungsteils (1) einrastbar ist.

13. Steckverbindungssystem nach Anspruch 12, **dadurch gekennzeichnet, dass** das Entriegelungselmenent (3) einen Entrasthebel (3.5) aufweist und dass die Einrastnase (3.2) durch Betätigung des Entrasthebels aus der Einrastnut (22.2) anhebbar ist.

14. Steckverbindungssystem nach Anspruch 12, **dadurch gekennzeichnet, dass** das Entriegelungselement (3) ein Gelenk (3.9) aufweist, dass sich die Einrastnase (3.2) bezüglich des Gelenks in einer vorderen Partie befindet und durch Zusammendrücken des Entriegelungselements in einer hinteren Partie aus der Einrasatnut (22.2) anheben lässt.

15. Steckverbindungssystem nach einem der vorangehenden Ansprüche, **dadurch gekennzeichnet, dass** die Ausformungen (3.1; 22.1, 23.2) des Entriegelungselementes (3) und des Stecker- bzw. Buchsen- respektive Kupplungsteils sich in einem Querschnitt entsprechen, so dass die genannten Ausformungen passgenau ineinander einführbar sind.

16. Stecker für ein Steckverbindungssystem nach einem der vorangehenden Ansprüche, aufweisend ein Sperrelement (21.1), hinter welches eine Rastklinke (11.1) einer Buchse oder Kupplung einrastbar ist, wobei der Stecker zusätzlich ein Aufnahmelement (22) aufweist, in welchem eine Ausformung (22.1) vorhanden ist, in die eine entsprechende Ausformung (3.1) eines Entriegelungselements (3) einführbar ist, wobei die Ausformung des Aufnahmeelements so ausgebildet ist, dass ein die Ausformung eines Entriegelungselementes eine Rastklinke einer Buchse oder Kupplung über das Sperrelement anheben kann.
